# EUROPÄISCHE PATENTSCHRIFT

(11) **EP 1 811 634 B1**
(45) Veröffentlichungstag und Bekanntmachung des Hinweises auf die Patenterteilung: **25.04.2012**
(21) Anmeldenummer: 07100608.4
(22) Anmeldetag: 16.01.2007
(51) Int. Cl.: H02K 3/50

(54) **Verbindungsanordnung für die Statorwicklung einer Turbomaschine mit 2 oder mehr parallelen Kreisen**
Connection arrangement for the stator winding of a turbo machine having two or more parallel circuits
Réfrigérateur doté d'un dispositif de production de glace

(30) Priorität: 24.01.2006 CH 1102006
(43) Veröffentlichungstag der Anmeldung: 25.07.2007
(73) Patentinhaber: Alstom Technology Ltd, 5400 Baden (CH)
(72) Erfinder: Drubel, Oliver, 91257, Pegnitz (DE); Mayor, Kevin, 5413, Birmenstorf (CH); Stallone, Francesco, 6600, Locarno (CH)

(56) Entgegenhaltungen:
- EP-A- 0 375 419
- US-A1- 2002 057 067
- R. LARI AND V. TARTAGLIONE: "AN ADVANCED GENERATOR COUPLED FRONT AND BACK TO GAS AND STEAM TURBINE FOR SINGLE SHAFT CONFIGURATION" POWERGEN EUROPE 2003, 8. Mai 2003 (2003-05-08), XP002380723 DUESSELDORF

## Beschreibung

### TECHNISCHES GEBIET

Die vorliegende Erfindung bezieht sich auf das Gebiet der elektrischen Maschinen. Sie betrifft eine Verbindungsanordnung für die Statorwicklung einer Turbomaschine mit 2 oder mehr parallelen Kreisen gemäss dem Oberbegriff des Anspruchs 1.

### STAND DER TECHNIK

Es existieren zahlreiche Schemata, in denen die Verbindungen von der Statorwicklung einer elektrischen Maschine heraus zum Maschinen- bzw. Generatorgehäuse geführt werden, um dort an die Sammelschienen angeschlossen zu werden. Im Allgemeinen werden die verbindenden Leiter dabei vom Phasenanschlussort, d.h. von den Enden der aus den Nuten des Statorkörpers herausragenden Wicklungsstäben, an der Rückseite der Evolute des Statorwickelkopfes entlang zu den auf einem Umfangskreis angeordneten äusseren Anschlüssen geführt.

Eine derartige Anordnung ist aus Dokument US 2002/57067 bekannt.

Die verwendete Anordnung hängt vom Wicklungsschema ab, insbesondere von der Anzahl der Phasen, der Anzahl der Pole und der Anzahl der Kreise pro Phase. Üblicherweise werden die verschiedenen Phasenverbindungsleiter so angeordnet, dass die Summe der Ströme aller Phasenringe an einem beliebigen Umfangsort auf einen bestimmten Wert begrenzt ist, um aus den Strömen in den Phasenringen resultierende Ungleichgewichte in der magnetomotorischen Kraft (MMF) zu vermeiden. Üblicherweise sind solche Verbindungsringe (Phasenringe) einzeln isoliert und entsprechend den physikalischen und elektrischen Randbedingungen einzeln verlegt.

In dem Artikel von Nagano S, Kitajima T, Yoshida K, Kazao Y, Murata D, Nagakura K., "Development of world's largest hydrogen-cooled turbine generator", PES Summer Meeting July 2002, Proceedings volume 2, pages 657-663, wird die Konstruktion und der Test eines Wasserstoff-gekühlten 500-600MVA-Generators beschrieben. Die dortige Fig. 15(b) verdeutlicht die Phasenringverbindungen und zeigt, dass die Wicklung 3 Phasen aufweist, von denen jede 3 parallele Kreise hat, wobei alle sechs äusseren Anschlüsse am Boden der Maschine angeordnet sind. Die 3 parallelen Kreise sind so angeordnet, dass sie innerhalb einer Phasengruppe zusammen in benachbarten Statornuten verlaufen. Jedoch sind die Phasenringe, welche sie mit den äusseren Anschlüssen verbinden, einzeln isoliert und einzeln zu einem geeigneten äusseren Anschluss geführt.

In dem Artikel von R. Lari, V. Tartaglione, "THR-L63, An Advanced Generator coupled front and back to gas and steam turbine for single shaft configuration", PowerGen Europe, Düsseldorf 6-8 May 2003, wird die Konstruktion eines Wasserstoff-gekühlten 400 MW-Generators beschrieben. Das darin auf Seite 11 vorkommende Bild der Wicklungskopfstütze ("end winding support") zeigt, dass die Wicklung ebenfalls 3 Phasen aufweist, die jeweils 3 parallele Kreise hat, und 3 äussere Anschlüsse am Boden und 3 äussere Anschlüsse an der Oberseite der Maschine umfasst. Die 3 parallelen Kreise sind so angeordnet, dass sie innerhalb einer Phasengruppe zusammen in benachbarten Nuten des Stators verlaufen. Jedoch sind auch hier die Phasenringe, welche sie mit den äusseren Anschlüssen verbinden, einzeln isoliert und einzeln zu einem geeigneten äusseren Anschluss geführt.

Die bekannte Technik der individuellen Führung der Phasenringverbindungen bedeutet, dass jeder Ring gegen die volle Spannung zwischen zwei Phasen isoliert und einzeln montiert und eingebaut werden muss. Das führt zu verschlechterten thermischen Eigenschaften der Verbindungsleiter und einem erhöhten Platzbedarf wegen der dickeren Stabisolierung und/oder wegen des grösseren Stababstandes. Auch die Notwendigkeit, einzelne Stäbe herzustellen und einzubauen, führt dazu, dass die Herstellung und der Zusammenbau der Wicklung zeitaufwändig und teuer ist. Dies ist insbesondere dann der Fall, wenn jede Phase mehr als 2 parallele Kreise hat.

### DARSTELLUNG DER ERFINDUNG

Es ist Aufgabe der Erfindung, eine Verbindungsanordnung für die Statorwicklung einer Turbomaschine mit 2 oder mehr parallelen Kreisen zu schaffen, welche sich durch verringerten Herstellungs- und Montageaufwand auszeichnet und in der Maschine weniger Platz beansprucht.

Die Aufgabe wird durch die Gesamtheit der Merkmale des Anspruchs 1 gelöst. Für die Erfindung wesentlich ist, dass die Phasenringe einer Phasengruppe innerhalb der Verbindungsanordnung jeweils systematisch zusammen als Phasenringgruppe von den Wicklungsanschlüssen zu den äusseren Anschlüssen geführt sind. Hierdurch wird vermieden, dass alle Phasenringe mit den oben geschilderten negativen Folgen einzeln in der Isolation auf die maximale Spannung zwischen zwei Phasen ausgelegt werden müssen.

Eine Ausgestaltung der Erfindung zeichnet sich dadurch aus, dass die Einzelleiter einer Phasengruppe getrennt voneinander in benachbarten Nuten des Statorkörpers verlaufen.

Eine andere Ausgestaltung der Erfindung ist dadurch gekennzeichnet, dass die Einzelleiter einer Phasengruppe untereinander isoliert zu einer mit gemeinsamer Aussenisolation versehenen Einheit zusammengefasst sind.

Insbesondere können die Einzelleiter ihrerseits aus einzelnen Teilleitern zusammengesetzt sein.

Eine weitere Ausgestaltung ist dadurch gekennzeichnet, dass benachbarte Phasenringe zweier benachbarter Phasenringgruppen einen ersten Abstand voneinander haben, dass die Phasenringe einer Phasenringgruppe untereinander einen zweiten Abstand haben, und dass der zweite Abstand deutlich kleiner ist, als der erste Abstand.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einer perspektivischen Darstellung ein Ausführungsbeispiel für eine Verbindungsanordnung nach der Erfindung bei einer Statorwicklung mit drei Phasen und drei Kreisen pro Phase und auf der Oberseite der Maschine angeordneten äusseren Anschlüssen;
- Fig. 2: die Konfiguration der Einzelleiter innerhalb der Phasengruppen bzw. Phasenringgruppen im Falle separater Einzelleiter; und
- Fig. 3: die Konfiguration der Einzelleiter innerhalb der Phasengruppen bzw. Phasenringgruppen im Falle von zu einer Einheit zusammengefassten Einzelleitern.

### WEGE ZUR AUSFÜHRUNG DER ERFINDUNG

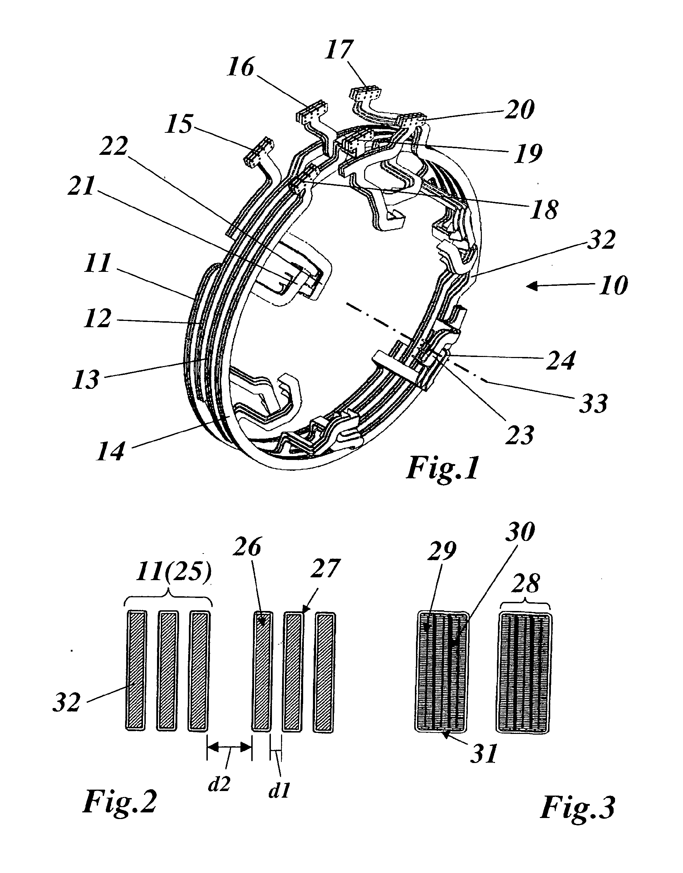

In Fig. 1 ist in einer perspektivischen Darstellung ein Ausführungsbeispiel für eine Verbindungsanordnung nach der Erfindung wiedergegeben. Der Stator, die Statorwicklung und das Maschinengehäuse sind aus Gründen der Übersichtlichkeit nicht dargestellt. Die Verbindungsanordnung 10 ist für drei Phasen ausgelegt, die jeweils drei parallele Kreise aufweisen. Zu den drei Phasen gehören die auf der Oberseite der Maschine angeordneten äusseren Anschlüsse 15, 16, 17 und 18, 19, 20. Die parallel zur Maschinenachse 33 in den Statornuten geführte Wicklung wird an einer Vielzahl von Wicklungsanschlüssen mit der Verbindungsanordnung 10 verbunden. Von den Wicklungsanschlüssen sind stellvertretend nur die Wicklungsanschlüsse einer Phase mit den Bezugszeichen 21,..,24 versehen. Im Beispiel der Fig. 1 sind pro Phase jeweils drei parallele Wicklungskreise vorhanden, deren (drei) Einzelleiter 26 - wie in Fig. 2 gezeigt - in Phasengruppen 25 nebeneinander laufen und in benachbarten Statornuten untergebracht sind. Entsprechend sind an den Wicklungsanschlüssen 21,..,24 der Fig. 1 jeweils drei nebeneinanderliegende Anschlüsse vorhanden. Jeder der Einzelleiter 26 wird in den Wicklungsanschlüssen 21,..,24 mittels eines konzentrisch zur Maschinenachse 33 angeordneten Phasenrings 32 mit dem zugehörigen äusseren Anschluss 15,..,20 verbunden.

Gegenstand der Erfindung ist nun die systematische (geordnete) Führung dieser Phasenringe 32, die einer bestimmten Phase zugeordnet sind, zusammen als Phasenringgruppe 11,..,14 von den Wicklungsanschlüssen 21,..,24 zu den äusseren Anschlüssen 15,..,20, wie dies in Fig. 1 gezeigt ist. Es ergeben sich mehrere Phasenringgruppen 11,..,14 zu je drei parallelen Phasenringen 32 mit entsprechenden Einzelleitern 26. Diese Anordnung bedeutet, dass benachbarte Phasenringe 32 zweier benachbarter Phasenringgruppen 11,..,14 gemäss Fig. 2 einen ersten Abstand d2 voneinander haben, dass die Phasenringe 32 einer Phasenringgruppe 11,..,14 einen zweiten Abstand d1 untereinander haben, und dass der zweite Abstand d1 wegen der geringeren Anforderungen an die Spannungsfestigkeit deutlich kleiner gewählt werden kann, als der erste Abstand d2. Dies bedeutet auch, dass die Isolationsdicke der Leiterisolation (27 in Fig. 2) jedes Einzelleiters (Stabes) 26 innerhalb der Phasengruppe 25 bzw. Phasenringgruppe 11 verringert werden kann, wodurch die thermischen Eigenschaften verbessert und die Herstellungskosten verringert werden, und zugleich eine kompaktere Anordnung der Leiter ermöglicht wird. Ein zusätzlicher Vorteil der Erfindung besteht darin, dass die Phasenringe 32 in Phasengruppen 25 hergestellt und zusammengebaut werden können, wodurch die Zeit für die Werksmontage und die nachfolgende Verpackung und Fixierung deutlich reduziert werden kann.

Fig. 1 zeigt die vorgeschlagene Phasenringanordnung für eine Phasenverbindung mit drei Phasen, drei parallelen Kreisen pro Phase und mit den äusseren Anschlüssen 15,..,20 auf der Oberseite (oder am Boden) der Maschine. Die drei Einzelleiter 26 werden systematisch zusammen als Gruppe von der Statorwicklung zum äusseren Anschluss geführt. Ähnliche Anordnungen sind für beliebige Orte der äusseren Anschlüsse möglich, z.B. mit 3 Anschlüssen oben und drei Anschlüssen unten. Die Einzelleiter können dabei entweder einen massiven Cu-Querschnitt haben (Fig. 2) oder selbst aus einer Mehrzahl von einzelnen Teilleitern zusammengesetzt sein, die transponiert sein können (Roebelstab), um Schlingstromverluste zu verringern (Fig. 3). Zusätzlich können die Einzelleiter innerhalb einer Phasengruppe 28 als vollständige Einheit hergestellt werden, wobei zwischen den Einzelleitern 29 eine Zwischenisolation 30, und um die Leitergruppe herum eine Aussenisolation 31 vorgesehen ist (Fig. 3).

Die Erfindung kann auf beliebige Statorwicklungen mit 2 oder mehr Kreisen angewendet werden, deren Wicklungen in benachbarten Nuten untergebracht sind, und sie kann auf Phasenabfolgen angewendet werden, die mitdrehend oder gegendrehend mit Drehrichtung des Rotors sind.

### BEZUGSZEICHENLISTE

- 10: Verbindungsanordnung
- 11,..,14: Phasenringgruppe
- 15,..,20: äusserer Anschluss
- 21,..,24: Wicklungsanschluss
- 25, 28: Phasengruppe
- 26, 29: Einzelleiter
- 27: Leiterisolation
- 30: Zwischenisolation
- 31: Aussenisolation
- 32: Phasenring
- 33: Maschinenachse
- d1, d2: Abstand

## Patentansprüche

1. Verbindungsanordnung (10) für die Statorwicklung einer Turbomaschine mit 2 oder mehr von Einzelleitern (26, 29) gebildeten parallelen Kreisen pro Phase, wobei die zu einer Phase gehörenden Einzelleiter (26, 29) Phasengruppen (25, 28) bilden und im Statorkörper innerhalb einer Phasengruppe (25, 28) unmittelbar nebeneinander verlaufen, und wobei die Einzelleiter (26, 29) der Wicklung jeweils von einem Wicklungsanschluss (21,..,24) aus über einen konzentrisch zur Maschinenachse (33) verlaufenden Phasenring (32) mit einem äusseren Anschluss (15,..,20) verbunden sind, und wobei die Phasenringe (32) einer Phasengruppe (25, 28) jeweils zusammen als Phasenringgruppe (11,..,14) aus parallelen Phasenringen von den Wicklungsanschlüssen (21,..,24) zu den äusseren Anschlüssen (15,..,20) geführt sind.

2. Verbindungsanordnung nach Anspruch 1, **dadurch gekennzeichnet, dass** die Einzelleiter (26) einer Phasengruppe (25) getrennt voneinander in benachbarten Nuten des Statorkörpers verlaufen.

3. Verbindungsanordnung nach Anspruch 1, **dadurch gekennzeichnet, dass** die Einzelleiter (29) einer Phasengruppe (28) untereinander isoliert zu einer mit gemeinsamer Aussenisolation (31) versehenen Einheit zusammengefasst sind.

4. Verbindungsanordnung nach einem der Ansprüche 1 bis 3, **dadurch gekennzeichnet, dass** die Einzelleiter (29) ihrerseits aus einzelnen Teilleitern zusammengesetzt sind.

5. Verbindungsanordnung nach einem der Ansprüche 1 bis 4, **dadurch gekennzeichnet, dass** benachbarte Phasenringe (32) zweier benachbarter Phasenringgruppen (11,..,14) einen ersten Abstand (d2) voneinander haben, dass die Phasenringe (32) einer Phasenringgruppe (11,..,14) einen zweiten Abstand (d1) untereinander haben, und dass der zweite Abstand (d1) deutlich kleiner ist, als der erste Abstand (d2).

## Claims

1. Connection arrangement (10) for the stator winding of a turbo machine with two or more parallel circuits of individual conductors (26, 29) per phase, whereby the individual conductors (26, 29) belonging to one phase form phase groups (25, 28) and run directly adjacent to one another in the stator body within a phase group (25, 28), and whereby the individual conductors (26, 29) of the winding are each connected from a winding connection (21, .., 24) to an external connection (15, .., 20) via a phase ring (32), which runs concentrically with respect to the machine axis (33), and whereby the phase rings (32) of a phase group (25, 28) are each led together as a phase ring group (11, .., 14) consisting of parallel phase rings from the winding connections (21, .., 24) to the external connections (15, .., 20).

2. Connection arrangement according to Claim 1, **characterized in that** the individual conductors (26) of a phase group (25) run separately from one another in adjacent slots of the stator body.

3. Connection arrangement according to Claim 1, **characterized in that** the individual conductors (29) of a phase group (28) are assembled, in a manner in which they are insulated from one another, to form a unit provided with common outer insulation (31).

4. Connection arrangement according to one of Claims 1 to 3, **characterized in that** the individual conductors (29) for their part comprise individual conductor elements.

5. Connection arrangement according to one of Claims 1 to 4, **characterized in that** adjacent phase rings (32) of two adjacent phase ring groups (11, .., 14) have a first distance (d2) from one another, **in that** the phase rings (32) of a phase ring group (11, .., 14) have a second distance (d1) from one another, and **in that** the second distance (d1) is markedly smaller than the first distance (d2).

## Revendications

1. Dispositif de raccordement (10) destiné à l'enroulement de stator d'une turbomachine comprenant deux ou plusieurs circuit parallèles constitués de conducteurs individuels (26, 29) par phase, dans lequel les conducteurs individuels (26, 29) appartenant à une phase forment des groupes de phase (25, 28) et s'étendent directement côte à côte dans le corps de stator à l'intérieur d'un groupe de phase (25, 28), et dans lequel les conducteurs individuels (26, 29) de l'enroulement sont respectivement reliés par une borne d'enroulement (21, ..., 24) par l'intermédiaire d'un anneau de phase (32) s'étendant concentriquement à l'axe de la machine (33) à une borne externe (15, ..., 20), et dans lequel les anneaux de phase (32) d'un groupe de phase (25, 28) sont respectivement acheminés ensemble sous la forme de groupes d'anneaux de phase (11, ..., 14) constitués d'anneaux de phase parallèles des bornes d'enroulement (21, ..., 24) aux bornes externes (15, ..., 20).

2. Dispositif de raccordement selon la revendication 1, **caractérisé en ce que** les conducteurs individuels (26) d'un groupe de phase (25) s'étendent de manière séparée les uns des autres dans des gorges adjacentes du corps de stator.

3. Dispositif de raccordement selon la revendication 1, **caractérisé en ce que** les conducteurs individuels (29) d'un groupe de phase (28) sont rassemblés de manière isolée les uns des autres à l'emplacement d'une unité munie d'une isolation externe commune (31).

4. Dispositif de raccordement selon l'une des revendications 1 à 3, **caractérisé en ce que** les conducteurs individuels (29) sont quant à eux composés de conducteurs partiels individuels.

5. Dispositif de raccordement selon l'une des revendications 1 à 4, **caractérisé en ce que** des anneaux de phase adjacents (32) de deux groupes de phase adjacents (11, ..., 14) sont séparés les uns des autres d'une première distance (d2), **en ce que** les anneaux de phase (32) d'un groupe d'anneaux de phase (11, ..., 14) sont séparés les uns des autres d'une seconde distance (d1), et **en ce que** la seconde distance (d1) est sensiblement inférieure à la première distance (d2).
